# EUROPEAN PATENT APPLICATION

(11) **EP 3 890 047 A1**
(43) Date of publication of application: **06.10.2021**
(21) Application number: 19889131.9
(22) Date of filing: 27.09.2019
(51) Int. Cl.: H01M 2/10, H01M 2/12

(54) **BATTERY MODULE**

(30) Priority: 28.11.2018 JP 2018222205
(71) Applicant: SANYO Electric Co., Ltd., Daito-shi Osaka 574-8534 (JP)
(72) Inventor: EGASHIRA Takuya, Osaka-shi, Osaka 540-6207 (JP); YOSHIDA Naotake, Osaka-shi, Osaka 540-6207 (JP)
(74) Representative: Vigand, Philippe
(86) International application number: PCT/JP2019/038298
(87) International publication number: WO 2020/110448

(57) **Abstract**

In order to enhance the safety of a battery module, battery module (1) including: battery stack (2) that has a plurality of batteries stacked, each of the batteries having a valve part that releases gas inside the battery; exhaust duct (38) that is connected to the valve part of each battery; and shock absorbing layer (39) that is disposed on a surface of first wall portion (34) of exhaust duct (38) facing the valve part, the surface facing an inside of the exhaust duct, shock absorbing layer (39) having a smaller elastic modulus than first wall portion (34).

## Description

### TECHNICAL FIELD

The present invention relates to a battery module.

### BACKGROUND ART

For example, a battery module in which a plurality of batteries are electrically connected is known as a power source that requires a high output voltage, for example, for a vehicle. In general, each battery constituting the battery module is provided with a valve part that opens in response to an increase in internal pressure. When gas is generated by a chemical reaction inside the battery and the internal pressure of the battery increases, a high-temperature and high-pressure gas is discharged from the valve part. An exhaust duct is connected to each valve part, and the gas discharged from the battery is discharged through the exhaust duct to the outside of the battery module.

Regarding such a battery module, PTL 1 discloses a structure in which a metal layer is provided on an inner surface of an exhaust duct, which is a surface facing a valve part of each battery. In this battery module, by providing a metal layer on the top surface of the exhaust duct that receives the high-temperature and high-pressure gas discharged from each battery, the exhaust duct is prevented from being damaged or melted by the shock or heat of the gas.

### Citation List

### Patent Literature

PTL 1: WO 2013/161655

### SUMMARY OF THE INVENTION

### Technical problem

In recent years, there has been a demand for even higher capacities of battery modules, and in order to meet this demand, increases in capacities of batteries have been promoted. As the capacity of a battery increases, the amount of gas discharged from the battery increases. The gas discharged from the battery includes flammable gas. Further, the gas also includes fine particles such as fragments of a battery structure. If the flammable gas and the high-temperature fine particles are discharged to the outside of the battery, and the flammable gas, the high-temperature fine particles, and oxygen outside the battery are met, ignition may occur. Therefore, if the amount of gas discharged from the battery increases, the risk of ignition and the scale of ignition increase, and there is a risk that the safety of the battery module decreases.

In such circumstances, the present inventors have conducted extensive research on a conventional battery module in which the gas discharged from the battery is directly received by a metal layer provided on the top surface of the exhaust duct, and have recognized that the conventional battery module has room for further improvement of the safety.

The present invention has been made in view of these circumstances, and an object of the present invention is to provide a technique for enhancing the safety of a battery module.

### Solution to problem

An aspect of the present invention is a battery module. The battery module includes: a battery stack that has a plurality of batteries stacked, each of the batteries having a valve part that releases gas inside the battery; an exhaust duct that is connected to the valve part of each battery; and a shock absorbing layer that is disposed on a surface of a first wall portion of the exhaust duct facing the valve part, the surface facing an inside of the exhaust duct, the shock absorbing layer having a smaller elastic modulus than the first wall portion.

It should be noted that any combination of the above components and conversions of the expression of the present invention between methods, devices, systems and the like are also effective as aspects of the present invention. Advantageous effect of invention

According to the present invention, the safety of the battery module can be enhanced.

### BRIEF DESCRIPTION OF DRAWINGS

FIG. 1 is an exploded perspective view of a battery module according to an exemplary embodiment.
FIG. 2 is an enlarged cross-sectional view showing an upper part of the battery module.

### DESCRIPTION OF EMBODIMENT

Hereinafter, the present invention will be described with reference to the drawings based on a preferred exemplary embodiment. The exemplary embodiment does not limit the invention, but is exemplary, and all the features and combinations thereof described in the exemplary embodiment are not necessarily essential to the invention. The same or equivalent components, members, and processing shown in each drawing are denoted by the same reference numerals, and duplicated description will be appropriately omitted. Further, the scale and shape of each part shown in each drawing are set for convenience for the sake of easy description, and are not limitedly interpreted unless otherwise specified. Further, when terms such as "first" and "second" are used in the present specification or claims, these terms do not represent any order or importance unless otherwise specified, but distinguish between a certain configuration and other configurations. Further, in each drawing, some of the members that are not important for describing the exemplary embodiment are omitted.

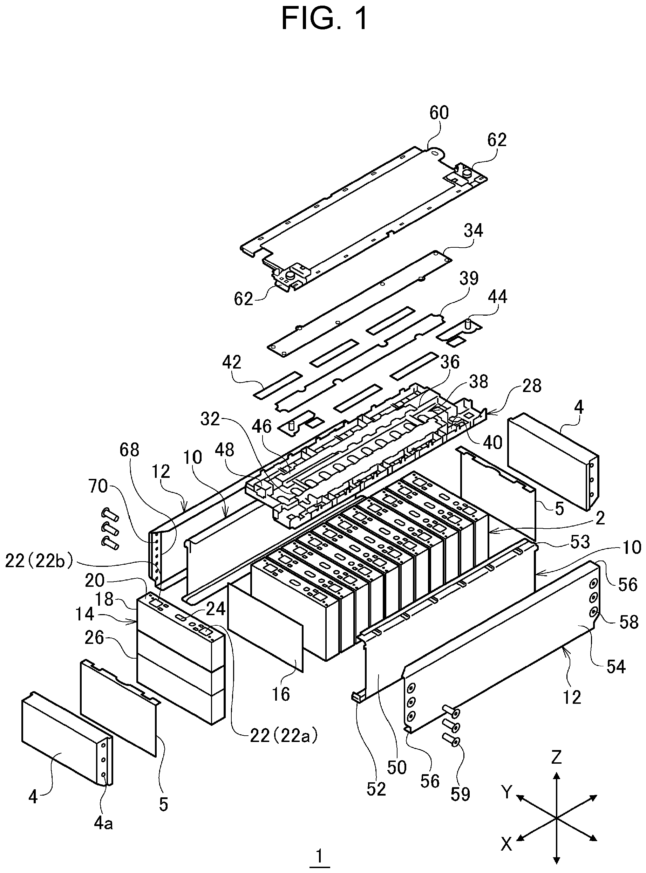

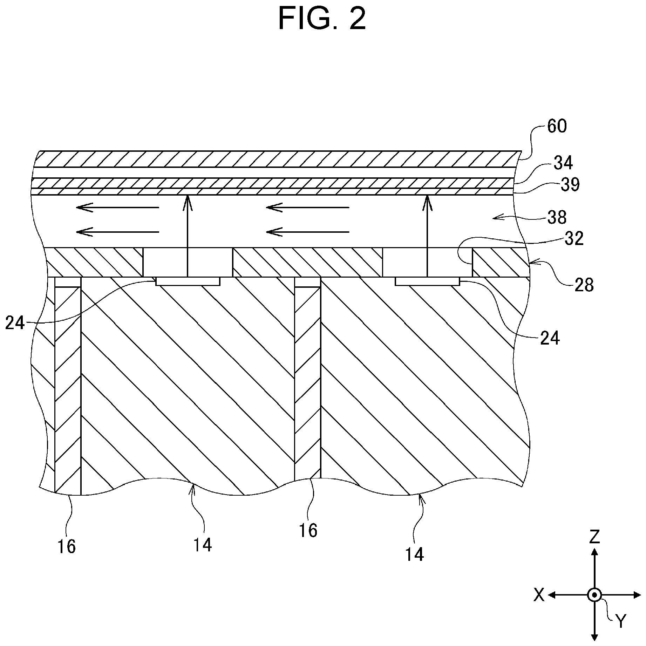

FIG. 1 is an exploded perspective view of a battery module according to an exemplary embodiment. FIG. 2 is an enlarged cross-sectional view showing an upper part of the battery module. In FIG. 2, the illustration of the internal structure of battery 14 is omitted. Battery module 1 includes battery stack 2, a pair of endplates 4, side separators 10, restraint members 12, bus bar plate 28, and top cover 60.

Battery stack 2 includes a plurality of batteries 14 and inter-cell separators 16. Each battery 14 is a rechargeable secondary battery such as a lithium ion battery, a nickel-hydrogen battery, or a nickel-cadmium battery. Battery 14 is a so-called square battery, and has outer can 18 having a flat rectangular parallelepiped shape. A substantially rectangular opening, which is not shown, is provided on one surface of outer can 18, and an electrode body, an electrolytic solution, and the like are accommodated in outer can 18 through this opening. Sealing plate 20 for sealing outer can 18 is provided at the opening of outer can 18.

Sealing plate 20 is provided with positive electrode output terminal 22 near one end in a longitudinal direction and negative electrode output terminal 22 near the other end. The pair of output terminals 22 are electrically respectively connected to a positive electrode plate and a negative electrode plate, which constitute an electrode body. Hereinafter, positive electrode output terminal 22 will be referred to as positive electrode terminal 22a, and negative electrode output terminal 22 will be referred to as negative electrode terminal 22b. Further, when it is not necessary to distinguish the polarities of output terminals 22, positive electrode terminal 22a and negative electrode terminal 22b are collectively referred to as output terminal 22. Outer can 18, sealing plate 20, and output terminal 22 are conductors, for example, made of metal. Sealing plate 20 and the opening of outer can 18 are joined by welding or the like. Each output terminal 22 is inserted into a through-hole (not shown) formed in sealing plate 20. A sealing member (not shown) having an insulation property is interposed between each output terminal 22 and each through-hole.

In the present exemplary embodiment, for convenience of description, the surface of outer can 18 where sealing plate 20 is provided is the top surface of battery 14, and the surface facing away from the top surface of outer can 18 is the bottom surface of battery 14. Further, battery 14 has two main surfaces connecting the top surface and the bottom surface. This main surface is the surface having the largest area among the six surfaces of battery 14. Further, the main surface is a long side surface connected to the long sides of the top surface and the bottom surface. The remaining two surfaces excluding the top surface, the bottom surface, and the two main surfaces are the side surfaces of battery 14. This side surface is a short side surface connected to the short sides of the top surface and the bottom surface.

Further, for convenience of description, the surface on the top surface side of battery 14 in battery stack 2 is the top surface of battery stack 2, the surface on the bottom surface side of battery 14 is the bottom surface of battery stack 2, and the surface on the short side surface side of battery 14 is the side surface of battery stack 2. Further, the top surface side of battery stack 2 is upward in the vertical direction, and the bottom surface side of battery stack 2 is downward in the vertical direction. These directions and positions are defined for convenience. Therefore, for example, the portion defined as the top surface in the present invention does not mean that the portion defined as the top surface is always located above the portion defined as the bottom surface.

Valve portion 24 is provided between the pair of output terminals 22 on sealing plate 20. Valve portion 24, also called a safety valve, is a mechanism for releasing the gas inside battery 14. Valve portion 24 is configured such that the valve can be opened when the internal pressure of outer can 18 rises above a predetermined value to release the gas inside. Valve portion 24 includes, for example, a thin portion provided in a part of sealing plate 20 and thinner than the other portion, and a linear groove formed on the surface of the thin portion. In this configuration, when the internal pressure of outer can 18 rises, the thin portion is torn from the groove to open the valve. Valve portion 24 of each battery 14 is connected to exhaust duct 38 described later, and the gas inside the battery is discharged from valve part 24 to exhaust duct 38.

Further, battery 14 has insulating film 26. Insulating film 26 is, for example, a tubular shrink tube, and is heated after outer can 18 is passed through the inside. Thus, insulating film 26 shrinks and covers the two main surfaces and the two side surfaces of outer can 18. Insulating film 26 can suppress a short circuit between adjacent batteries 14 or between battery 14 and endplate 4.

The plurality of batteries 14 are stacked at predetermined intervals such that the main surfaces of adjacent batteries 14 face each other. Note that, "stacking" means arranging a plurality of members in any one direction. Therefore, stacking batteries 14 includes arranging the plurality of batteries 14 horizontally. Further, each battery 14 is arranged such that output terminals 22 face the same direction. In the present exemplary embodiment, for convenience, each battery 14 is arranged such that output terminals 22 face upward in the vertical direction. Two adjacent batteries 14 are stacked such that positive electrode terminal 22a of one battery 14 and negative electrode terminal 22b of another battery 14 are adjacent to each other.

Inter-cell separator 16 is also called an insulating spacer, and is made of, for example, a resin sheet having an insulation property. Examples of the resin constituting inter-cell separator 16 include thermoplastic resins such as polypropylene (PP), polybutylene terephthalate (PBT), polycarbonate (PC), and Noryl (registered trademark) resin (modified polyphenylether (PPE)). Inter-cell separator 16 is arranged between two adjacent batteries 14 and electrically insulates two batteries 14.

Battery stack 2 is sandwiched between the pair of endplates 4. The pair of endplates 4 are arranged at both ends of battery stack 2 in stacking direction X of batteries 14. The pair of endplates 4 are adjacent to batteries 14 located at both ends in stacking direction X via outer end separators 5. Outer end separator 5 can be made of the same resin material as inter-cell separator 16. Each endplate 4 is a metal plate made of a metal such as iron, stainless steel, or aluminum. By interposing outer end separator 5 between endplate 4 and battery 14, endplate 4 and battery 14 are insulated.

Each endplate 4 has fastening holes 4a on two surfaces facing direction Y orthogonal to stacking direction X of batteries 14, that is, the direction in which the pair of output terminals 22 are arranged. In the present exemplary embodiment, three fastening holes 4a are arranged at predetermined intervals in direction Z in which the top surface and the bottom surface of battery stack 2 are arranged. The surface on which fastening holes 4a are provided is a surface facing flat surface portion 54 of restraint member 12.

Bus bar plate 28 is placed on the top surface of battery stack 2. Bus bar plate 28 is a plate-shaped member that covers the surfaces of the plurality of batteries 14 provided with output terminals 22. Bus bar plate 28 is made of, for example, a polybutylene terephthalate (PBT) resin. Bus bar plate 28 has a plurality of openings 32 that expose valve parts 24 at positions corresponding to valve parts 24 of batteries 14. Further, bus bar plate 28 has exhaust duct 38 that communicates with the plurality of openings 32. Therefore, exhaust duct 38 is connected to valve part 24 of each battery 14 via opening 32.

Exhaust duct 38 has first wall portion 34 and a pair of second wall portions 36. First wall portion 34 extends in stacking direction X and faces each valve part 24. The pair of second wall portions 36 extend in stacking direction X and are arranged so as to sandwich the plurality of openings 32 in direction Y. That is, first wall portion 34 is the top surface that covers the upper part of openings 32, and the pair of second wall portions 36 are sidewalls that surround the sides of openings 32. When first wall portion 34 is fixed to the upper ends of the pair of second wall portions 36, exhaust duct 38 is formed in bus bar plate 28. In the present exemplary embodiment, first wall portion 34 is made of a metal such as iron or aluminum. Second wall portions 36 are made of a resin such as polypropylene (PP), polybutylene terephthalate (PBT), polycarbonate (PC), or Noryl (registered trademark) resin (modified PPE). Note that second wall portions 36 are integrally molded with portions of bus bar plate 28 excluding first wall portion 34.

Shock absorbing layer 39 is disposed on the surface of first wall portion 34 facing the inside of the exhaust duct. Shock absorbing layer 39 has a sheet shape extending in stacking direction X, and is attached to an inner surface of first wall portion 34 by, for example, an adhesive. Shock absorbing layer 39 has a smaller elastic modulus than first wall portion 34. That is, shock absorbing layer 39 is softer than first wall portion 34, and is more easily deformed than first wall portion 34 when an external force is applied. Therefore, when the gas is discharged from valve part 24 of battery 14, shock absorbing layer 39 is deformed by the pressure of the gas. Thus, it is possible to absorb the shock of the gas that hits the top surface of exhaust duct 38, and suppress the momentum that fine particles such as fragments of the battery structure contained in the gas hit the top surface of exhaust duct 38 and bounce off. Therefore, it is possible to suppress the scattering of the fine particles.

In the present exemplary embodiment, shock absorbing layer 39 is disposed only on first wall portion 34 facing valve part 24 of each battery 14. The pair of second wall portions 36 constituting the sidewalls of exhaust duct 38 are not provided with shock absorbing layer 39 and are exposed to the internal space of exhaust duct 38. The gas discharged from battery 14 is usually ejected in the direction perpendicular to sealing plate 20 provided with valve part 24. Therefore, the top surface of exhaust duct 38 mainly receives the gas directly. Therefore, by providing shock absorbing layer 39 only on first wall portion 34, the scattering of fine particles is unfailingly suppressed, and an increase in a number of parts and an increase in the cost of battery module 1 due to the provision of shock absorbing layer 39 can be suppressed. Note that shock absorbing layer 39 may also be disposed on second wall portions 36.

Further, shock absorbing layer 39 of the present exemplary embodiment has a lower thermal conductivity than first wall portion 34. Further, shock absorbing layer 39 has a lower thermal conductivity than air. Thus, the heat of the gas discharged from battery 14 can be prevented by shock absorbing layer 39 from being transferred to first wall portion 34. As a result, it is possible to reduce the possibility that first wall portion 34 is deformed or damaged by the heat of the gas discharged from battery 14. Further, shock absorbing layer 39 preferably has flame resistance and heat resistance. Thus, it is possible to maintain the suppression of scattering of fine particles and the suppression of heat transfer to first wall portion 34 for a longer period of time.

Examples of the material constituting shock absorbing layer 39 include a fiber aggregate in which organic fibers and inorganic fibers are aggregated, and a heat conduction suppressing sheet formed of a heat insulating material and a laminated film.

The heat insulating material of the heat conduction suppressing sheet has a sheet shape, and has a structure in which a porous material such as silica xerogel is supported between fibers of a fiber sheet made of a non-woven fabric or the like. Silica xerogel has a nano-sized void structure that regulates the movement of air molecules and has low thermal conductivity. The thermal conductivity of the heat insulating material is about 0.018 W/m ·K to 0.024 W/m ·K. The heat insulating material is particularly useful as a heat insulating material used in a narrow space. The thermal conductivity of the heat insulating material is lower than the thermal conductivity of air. Further, silica xerogel flexibly deforms in response to external pressure, and its structure can be stably maintained. Therefore, the structure of shock absorbing layer 39 can be stably maintained even if a shock is applied by the gas discharged from battery 14.

The laminated film is a member for wrapping and protecting the entire heat insulating material. The laminated film can prevent the porous material in the heat insulating material from falling off from the fiber sheet. Further, by covering the heat insulating material with the laminated film, shock absorbing layer 39 can be easily adhered to first wall portion 34 when battery module 1 is assembled. The laminated film is made of, for example, polyethylene terephthalate (PET) or the like. Further, this heat conduction suppressing sheet has high heat resistance. More specifically, the heat insulating material has high heat resistance. Further specifically, the fiber sheet and the porous material have a high melting point, for example, 300°C or higher.

Further, bus bar plate 28 has openings 40 for exposing output terminals 22 at positions corresponding to output terminals 22 of batteries 14. Bus bar 42 is placed on each opening 40. The plurality of bus bars 42 are supported by bus bar plate 28. Bus bar 42 placed on each opening 40 electrically connects positive electrode terminal 22a and negative electrode terminal 22b of adjacent batteries 14.

Bus bar 42 is a member having a substantially strip shape made of a metal such as copper or aluminum. One end of bus bar 42 is connected to positive electrode terminal 22a of one battery 14, and the other end is connected to negative electrode terminal 22b of another battery 14. Note that bus bar 42 may connect output terminals 22 having the same polarity of a plurality of adjacent batteries 14 in parallel to form a battery block and may further connect the battery blocks in series.

Bus bars 42 connected to output terminals 22 of batteries 14 located at both ends in stacking direction X have external connection terminals 44. External connection terminal 44 is electrically connected to terminal portion 62 of top cover 60, which will be described later. External connection terminal 44 is connected to an external load (not shown) via terminal portion 62. Further, voltage detection line 46 is placed on bus bar plate 28. Voltage detection line 46 is electrically connected to the plurality of batteries 14 and detects the voltage of each battery 14. Voltage detection line 46 has a plurality of conductors (not shown). One end of each conductor is connected to each bus bar 42, and the other end is connected to connector 48. Connector 48 is connected to an external battery electronic control unit (ECU) (not shown) or the like. The battery ECU controls the detection of the voltage or the like of each battery 14 and charging and discharging or the like of each battery 14.

Side separators 10 are members each having an elongated shape that is long in stacking direction X of batteries 14. In the present exemplary embodiment, the pair of side separators 10 are arranged in direction Y orthogonal to stacking direction X of batteries 14. Each side separator 10 is made of, for example, a resin having an insulation property. Similar to inter-cell separator 16, examples of the resin constituting side separator 10 include thermoplastic resins such as polypropylene (PP), polybutylene terephthalate (PBT), polycarbonate (PC), and Noryl (registered trademark) resin (modified PPE).

Battery stack 2 and the pair of endplates 4 are arranged between the pair of side separators 10. Each side separator 10 has first portion 50, second portion 52, and third portion 53. First portion 50 has a rectangular shape and extends in stacking direction X of batteries 14 along the side surface of battery stack 2. Second portion 52 has a strip shape extending in stacking direction X and projects from the lower side of first portion 50 toward battery stack 2. Third portion 53 has a strip shape extending in stacking direction X and projects from the upper side of first portion 50 toward battery stack 2.

Restraint member 12 is also called a bind bar and is a member having an elongated shape that is long in stacking direction X of batteries 14. In the present exemplary embodiment, the pair of restraint members 12 are arranged in direction Y orthogonal to stacking direction X of batteries 14. Each restraint member 12 is made of a metal such as iron or stainless steel. Battery stack 2, the pair of endplates 4, and the pair of side separators 10 are arranged between the pair of restraint members 12.

Each restraint member 12 has flat surface portion 54 and a pair of arm portions 56. Flat surface portion 54 has a rectangular shape and extends in stacking direction X along the side surface of battery stack 2. The pair of arm portions 56 project from the ends of flat surface portion 54 toward battery stack 2, and face each other in arrangement direction Z of battery stack 2 and cooling plate 6. That is, one arm portion 56 projects from the upper side of flat surface portion 54 toward battery stack 2, and another arm portion 56 projects from the lower side of flat surface portion 54 toward battery stack 2. Battery stack 2 and the pair of side separators 10 are arranged between the pair of arm portions 56.

Contact plate 68 is fixed to the region of flat surface portion 54 facing each endplate 4 by welding or the like. Contact plate 68 is a member long in arrangement direction Z. Contact plate 68 is provided with through-holes 70 that penetrate contact plate 68 in direction Y at positions corresponding to fastening holes 4a of endplate 4. Further, flat surface portion 54 has through-holes 58 that penetrate flat surface portion 54 in direction Y at positions corresponding to through-holes 70 of contact plate 68.

By engaging the pair of endplates 4 with flat surface portion 54 of each restraint member 12, the plurality of batteries 14 are restrained in stacking direction X. Specifically, the plurality of batteries 14 and the plurality of inter-cell separators 16 are alternately arranged to form battery stack 2, and battery stack 2 is sandwiched by the pair of endplates 4 via outer end separators 5 in direction X. In this state, battery stack 2 and the pair of endplates 4 are sandwiched by the pair of side separators 10 in direction Y. Moreover, the pair of restraint members 12 sandwich the whole in direction Y from the outside of the pair of side separators 10.

The pair of endplates 4 and the pair of restraint members 12 are aligned with each other such that fastening holes 4a, through-holes 70, and through-holes 58 overlap each other. Then, fastening members 59 such as screws are inserted into through-holes 58 and through-holes 70 and screwed into fastening holes 4a. Thus, the pair of endplates 4 and the pair of restraint members 12 are fixed. By engaging the pair of endplates 4 with the pair of restraint members 12, the plurality of batteries 14 are fastened and restrained in stacking direction X. Thus, each battery 14 is positioned in stacking direction X. Further, the top surfaces and the bottom surfaces of the plurality of batteries 14 are sandwiched between two arm portions 56 facing each other in arrangement direction Z. Thus, the plurality of batteries 14 are positioned in arrangement direction Z.

First portion 50 of side separator 10 extends along the side surface of battery stack 2 in stacking direction X of batteries 14. Flat surface portion 54 of restraint member 12 extends in stacking direction X of batteries 14 on an outer side of first portion 50 along the side surface of battery stack 2. Therefore, first portion 50 of side separator 10 is interposed between the side surface of battery stack 2 and flat surface portion 54 of restraint member 12. Thus, the side surface of each battery 14 and restraint member 12 are electrically insulated.

Second portion 52 of side separator 10 abuts on the bottom surface of battery stack 2. Arm portion 56 projecting from the lower end of flat surface portion 54 of restraint member 12 extends on an outer side of second portion 52 along the bottom surface of battery stack 2. Therefore, second portion 52 of side separator 10 is interposed between the bottom surface of battery stack 2 and one arm portion 56, i.e., lower arm portion 56, of restraint member 12. Thus, the bottom surface of each battery 14 and restraint member 12 are electrically insulated.

Third portion 53 of side separator 10 abuts on the top surface of battery stack 2. Arm portion 56 projecting from the upper end of flat surface portion 54 of restraint member 12 extends on an outer side of third portion 53 along the top surface of battery stack 2. Therefore, third portion 53 of side separator 10 is interposed between the top surface of battery stack 2 and another arm portion 56, i.e., upper arm portion 56, of restraint member 12. Thus, the top surface of each battery 14 and restraint member 12 are electrically insulated.

As an example, after the positioning of the aforementioned members is completed, bus bar plate 28 is placed on battery stack 2. Then, bus bar 42 is attached to output terminal 22 of each battery 14, and output terminals 22 of the plurality of batteries 14 are electrically connected to each other. For example, bus bar 42 is fixed to output terminal 22 by welding.

Top cover 60 is stacked on the top surface of bus bar plate 28. Top cover 60 suppresses contact of condensed water, dust, or the like with output terminal 22 and valve part 24 of battery 14, bus bar 42, and the like. Top cover 60 is made of, for example, a resin having an insulation property. Top cover 60 has terminal portions 62 at positions overlapping external connection terminals 44 in arrangement direction Z. Top cover 60 is fixed to bus bar plate 28 by, for example, a snap-fit. With top cover 60 placed on bus bar plate 28, external connection terminals 44 and terminal portions 62 are connected.

Note that a cooling plate for cooling battery stack 2 may be disposed on the bottom surface of battery stack 2. Further, a heat conduction layer may be interposed between battery stack 2 and the cooling plate.

As described above, battery module 1 according to the present exemplary embodiment includes battery stack 2 that has a plurality of batteries 14 stacked, each of the batteries 14 having valve part 24 that releases gas inside the battery; exhaust duct 38 that is connected to valve part 24 of each battery 14; and shock absorbing layer 39 that is disposed on a surface of first wall portion 34 of exhaust duct 38 facing valve part 24, the surface facing an inside of the exhaust duct, shock absorbing layer 39 having a smaller elastic modulus than first wall portion 34.

In this way, by disposing soft shock absorbing layer 39 on the top surface of exhaust duct 38 that directly receives the gas ejected from valve part 24, the fine particles in the exhaust gas can be prevented from hitting the top surface of exhaust duct 38 and scattering. Thus, it is possible to suppress the scattering of the fine particles to the outside of battery module 1 or toward batteries 14, and it is possible to suppress the risk of ignition of battery module 1 and the increase in the scale of ignition. Therefore, the safety of battery module 1 can be enhanced. Further, while enhancing the safety of battery module 1, the capacity of battery module 1 can be further increased.

Further, shock absorbing layer 39 of the present exemplary embodiment has a lower thermal conductivity than first wall portion 34. That is, shock absorbing layer 39 has a higher heat insulating property than first wall portion 34. Thus, it is possible to reduce the possibility that first wall portion 34 is deformed or damaged by the heat of the gas discharged from batteries 14. Therefore, the thickness of first wall portion 34, which is required to prevent deformation and damage due to heat, can be reduced. That is, the thickness of first wall portion 34 can be reduced. As a result, the height of battery module 1 can be reduced.

Further, first wall portion 34 of the present exemplary embodiment is made of metal. By forming first wall portion 34 with a highly rigid metal, top cover 60 can be more unfailingly protected from the gas ejected from batteries 14. Further, by making first wall portion 34 made of metal, the possibility of deformation or damage due to heat can be reduced. In this case, since the heat insulating property required for shock absorbing layer 39 can be lowered, the range of selection of the material constituting shock absorbing layer 39 can be expanded. Of course, even if first wall portion 34 is made of metal, it is effective to suppress deformation and damage of first wall portion 34 by heat insulation of shock absorbing layer 39.

Further, first wall portion 34 may be made of resin as long as deformation and damage of first wall portion 34 due to heat can be suppressed by heat insulation of shock absorbing layer 39. By making first wall portion 34 made of resin, the weight of battery module 1 can be reduced. Further, first wall portion 34 and shock absorbing layer 39 can be integrally molded.

The exemplary embodiment of the present invention has been described in detail above. The above-described exemplary embodiment merely shows a specific example in carrying out the present invention. The content of the exemplary embodiment does not limit the technical scope of the present invention, and many design changes such as modification, addition, and deletion of components can be made without departing from the idea of the invention specified in the claims. A new exemplary embodiment to which a design change has been added has the effects of an exemplary embodiment and a variation to be combined. In the above-described exemplary embodiment, the contents that can be changed in design are emphasized by adding notations such as "of the present exemplary embodiment" and "in the present exemplary embodiment", but design changes are allowed for contents without such notations. Any combination of the components included in the exemplary embodiment is also effective as an aspect of the present invention. The hatching added to the cross section of the drawing does not limit the material to which the hatching is added.

A number of batteries 14 included in battery module 1 is not particularly limited. The structure of each portion of battery module 1 including the shapes of inter-cell separator 16 and side separator 10 and the fastening structure between endplate 4 and restraint member 12 is not particularly limited. Battery 14 may have a cylindrical shape or the like.

### REFERENCE MARKS IN THE DRAWINGS

- 1:: battery module
- 2:: battery stack
- 14:: battery
- 24:: valve part
- 34:: first wall portion
- 38:: exhaust duct
- 39:: shock absorbing layer

## Claims

1. A battery module comprising:
a battery stack that has a plurality of batteries stacked, each of the plurality of batteries having a valve part that releases gas inside the each of the plurality of batteries;
an exhaust duct that is connected to the valve part of the each of the plurality of batteries; and
a shock absorbing layer that is disposed on a surface of a first wall portion of the exhaust duct facing the valve part, the surface facing an inside of the exhaust duct, the shock absorbing layer having a smaller elastic modulus than an elastic modulus of the first wall portion.

2. The battery module according to claim 1, wherein the shock absorbing layer has a lower thermal conductivity than a thermal conductivity of the first wall portion.

3. The battery module according to claim 2, wherein the first wall portion contains resin.

4. The battery module according to claim 1 or claim 2, wherein the first wall portion contains metal.
